Europäisches Patentamt

(19) European Patent Office

Office européen des brevets

(11) Publication number: 0 341 092
A2

(12) **EUROPEAN PATENT APPLICATION**

(21) Application number: 89304635.9

(22) Date of filing: 08.05.89

(51) Int. Cl.⁴: **G 01 N 21/62**
G 01 N 21/65, G 01 N 23/223
// G01N21/87, B07C5/342

(30) Priority: 06.05.88 GB 8810723
07.07.88 GB 8816165
09.11.88 GB 8826225
23.03.89 GB 8906853

(43) Date of publication of application:
08.11.89 Bulletin 89/45

(84) Designated Contracting States: BE DE NL

(71) Applicant: GERSAN ESTABLISHMENT
Staedtle 36
FL-9490, Vaduz (LI)

(72) Inventor: Smith, Martin Phillip
18 Hamilton Road
Wargrave Berkshire RG10 8BB (GB)

Cooper, Martin
37 Terrington
Marlow Buckinghamshire SL7 2RE (GB)

Welbourn, Christopher Mark
Oswald London Road
Sunningdale Berkshire (GB)

Spear, Paul Martin
3 Bottisham Close Lower Earley
Reading Berkshire RG6 4ED (GB)

(74) Representative: Lyndon-Stanford, Edward Willoughby
Brooke et al
MARKS & CLERK 57/60 Lincoln's Inn Fields
London WC2A 3LS (GB)

(54) A method of identifying specific objects or zones.

(57) In order to identify specific objects such as diamonds (or zones of an article), the objects 2 are subjected to an exciting radiation chosen such that the objects to be identified emit a weaker luminescence which is characteristic of the object and a stronger luminescence which is less characteristic of the object. The weaker luminescence is detected using a large aperture optical system 6-13 and a photo-multiplier tube 14. The stronger luminescence is detected more directly using a CCD array 20 or 20', which locates the track on the conveyer belt 1 from which the signal was emitted. In accordance with the track, the appropriate sort jet 23 is actuated when the PMT 14 and the CCD array 20, 20' give simultaneous signals.

FIG.1.

EP 0 341 092 A2

## Description

## A METHOD OF IDENTIFYING SPECIFIC OBJECTS OR ZONES

The Invention

The present invention provides the methods of Claim 1 or 11 and the apparatus of Claims 6 or 12. The remaining Claims set forth preferred or optional features of the invention.

The remainder of the description is particularly concerned with sorting diamonds from gangue on an extended belt, but the invention is generally applicable, as indicated in our patent Application EP 89 304 642.

As described in said Patent Application, it is possible to have separate means for detecting the existence of a specific luminescence and for identifying the position of the luminescence. The latter means can give positional information to a microprocessor for actuating a line of ejectors to eject diamond material. This enables narrow band pass filtering to be used for the detector which detects the existence of the specific object or zone, with a single very sensitive detector, and wider band pass filtering to be used for the detecting means which detect position. The sensitive detector would be expensive, but the position detecting means can be relatively cheap.

The invention can be used in arrangements in which the exciting radiation is not scanned across a line, but the whole line is permanently irradiated, for instance as in an X-ray recovery machine.

The exciting radiation can be any suitable radiation, for instance X-ray, ultra-violet or visible laser, and the emitted luminescence which is detected can be any suitable luminescence, not necessarily in the visible spectrum. The weaker luminescence will usually be in a narrow band. The preferred luminescences for diamonds are Raman luminescence as the weaker luminescence, which is weak but specific to diamonds, and general background luminescence, which is stronger but also emitted by e.g. zircons. As described in detail in said Patent Application, the Raman luminescence can be either the Stokes or the anti-Stokes emission.

Preferred embodiment

The invention will be further described, by way of example, with reference to the accompanying drawings, in which:

Figure 1 is a schematic side view of apparatus in accordance with the invention: and

Figure 2 is a view, generally as in Figure 1 but showing some alterations, and also illustrating the associated electronic components, in a schematic manner.

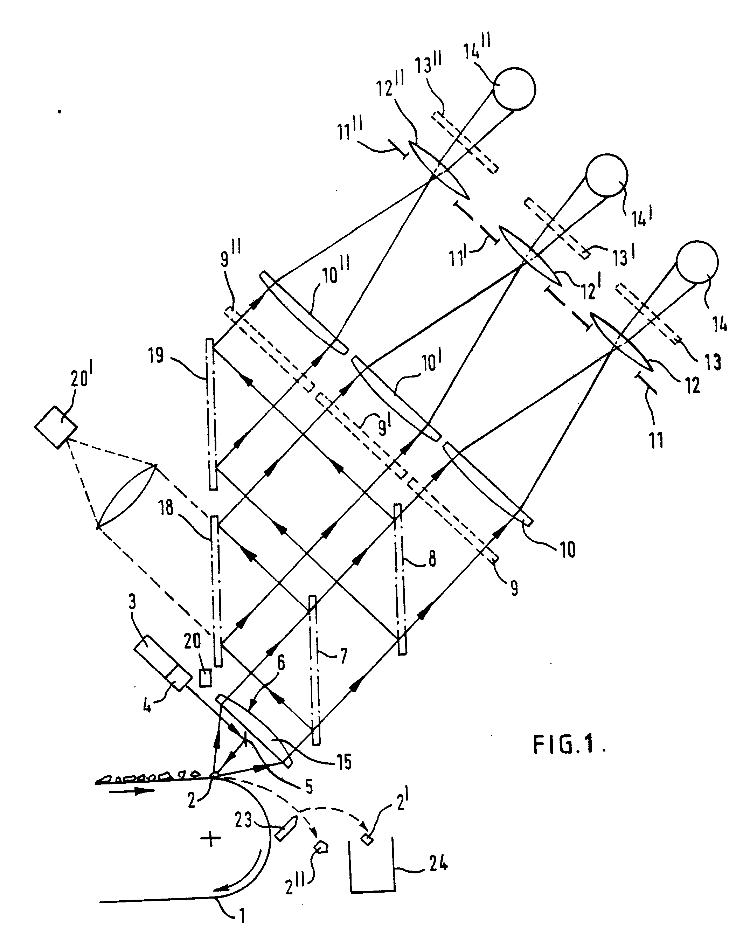

Figure 1 of the accompanying drawings is the same as Figure 3 of said Patent Application, and there is a full description of the apparatus in said Patent Application.

Essentially, a moving belt 1 carries a single layer of ore or gangue particles or objects 2. A helium-neon laser 3 projects exciting radiation along an extended line transversely of the belt 1, for instance by scanning along the line using a scanning unit 4. With a special optical system, any Roman signal (weak luminescence) from a particle 2 is detected by a PMT (photo-multiplier tube) 14. This indicates the presence in the irradiated line of a specific particle 2 to be sorted. If the laser 3 operates at 514.5 nm, the Stokes signal at 552.4 nm is detected by suitable narrow band pass filtering. Beam splitters 7, 8 are incorporated in order to detect background emission close to and on either side of the Stokes signal so that the background emission can be subtracted from the signal detected at the PMT 14.

Further sensing means 20 are positioned such that they sense radiation which is not passed through the optical system, the further sensing means 20 being sensitive to strong emission (strong luminescence) from the particles 2. The further sensing means 20 not only detect the presence of the specific particle 2 but also give a signal indicating its position. The further sensing means 20 may be a CCD (charged-coupled diode) camera or array whose individual elements view respective sections or tracks on the belt 1; a suitable array is a 1024 element array which gives very accurate positional information, and which can be put behind a micro-channel plate detector. Alternatively, a position sensitive PMT may be used. In either alternative, only a very simple optical system is required. A specific particle 2 is indicated when the PMT 14 and the sensing means 20 sense simultaneously. When sorting diamonds from ore, this can give a high confidence particle sort.

As an alternative, the sensing means can be at 20', in the viewing system after a collection lens array 6, with a suitable beam splitter 18.

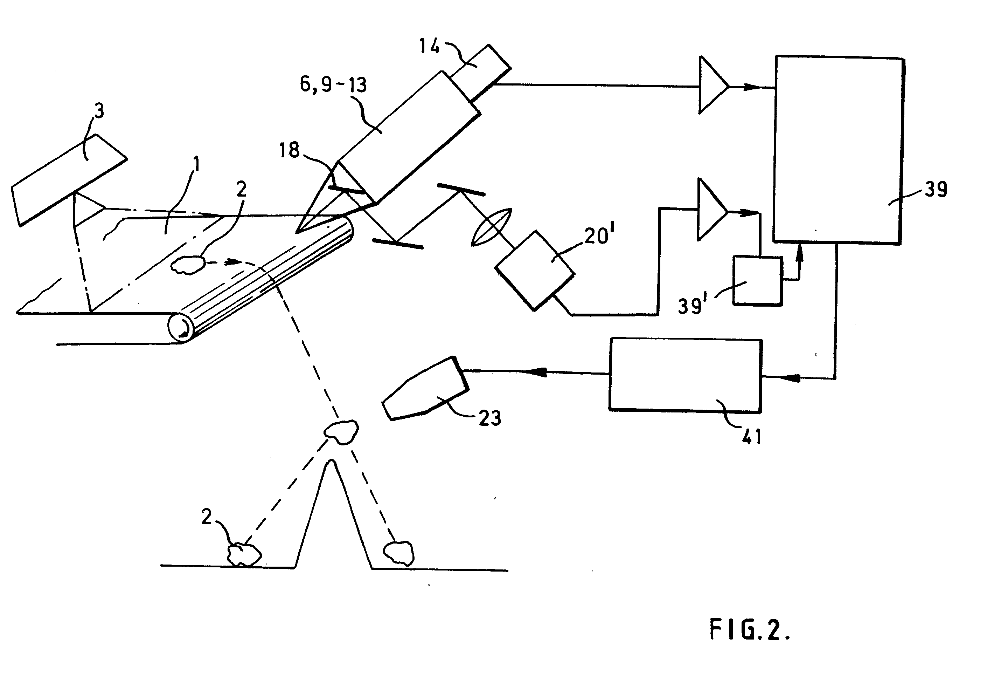

Figure 2 illustrates that the signal from the PMT 14 is passed via an amplifier to a micro-processor (or measurement and test module) 39 and that the positional signal from the sensing means 20' (or 20) is passed through an amplifier to a registration module 39' which analyses the position of the signal from the sensing means 20' (or 20) with respect to the width of the belt and gives a signal to the micro-processor 39 which includes time and position. When simultaneous signals are received from the PMT 14 and the sensing means 20' (or 20), an air jet control 41 actuates an appropriate air jet 23 in accordance with the positional signal from the module 39' and the specific particle 2 is blown out of its normal path.

Figure 2 shows that an unscanned e.g. X-ray source 3 can be used to irradiate the line across the belt 1. The X-ray source could be a tungsten target X-ray tube operating at 40 KeV. Here the three channels of the module 6, 9-14 can have filters 9, 9', 9" of 1 or 2 nm width, allowing to pass the luminescent peak and the wave lengths at full width half maximum points; as the diamond luminescence is distinguished by being semi-Gaussian, discrimination can be obtained, at least for specific types of diamond.

The peak may be between 400 and 500 nm (depending on the luminescence mechanism of the specfic type of diamond), and the filters 9′ 9″ 150 nm on either side of the peak.

Anything discussed in said Patent Application can be incorporated in the present invention, provided it is suitable. Said Patent Application gives many details which are applicable to the present invention.

The present invention has been described above purely by way of example, and modifications can be made within the spirit of the invention.

## Claims

1. A method of identifying specific objects or zones, which respond to an exciting radiation by emitting at least two luminescences, namely a weaker luminescence which is more characteristic of the specific object or zone to be identified, and a stronger luminescence which is less characteristic of the object or zone to be identified, the method comprising;
subjecting a plurality of the objects or zones to the exciting radiation;
detecting the weaker luminescence to indicate the presence of a specific object or zone to be identified; and
detecting the stronger luminescence in such a way as to identify the location from which the stronger luminescence was emitted and hence the location of the specific object or zone to be identified.

2. The method of Claim 1, wherein the weaker luminescence is Raman luminescence and the stronger luminescence is background luminescence.

3. The method of Claim 2, wherein the Raman luminescence is anti-Stokes luminescence.

4. The method of any of the preceding Claims, wherein the weaker luminescence is detected using a large aperture system with narrow band pass filter means.

5. The method of any of the preceding Claims, wherein the objects to be identified are diamonds.

6. Apparatus for identifying specific objects or zones, which respond to an exciting radiation by emitting at least two luminescences, namely a weaker luminescence which is more characteristic of the specific object or zone to be identified, and a stronger luminescence which is less characteristic of the object or zone to be identified, the apparatus to be used in association with means for subjecting a plurality of the objects or zones to the exciting radiation, the apparatus comprising:
first means for detecting the weaker luminescence to indicate the presence of a specific object or zone to be identified;
second means for detecting the stronger luminescence and identifying the location from which the stronger luminescence was emitted and hence the location of the specific object or zone to be identified; and

means for giving a signal when the first and second detecting means detect at the same instant.

7. The apparatus of Claim 6, wherein the weaker luminescence is Raman luminescence and the stronger luminescence is background luminescence.

8. The apparatus of Claim 7, wherein the Raman luminescence is anti-Stokes luminescence.

9. The apparatus of any of Claims 6 to 8, wherein the first means comprises a large aperture system with narrow band pass filter means.

10. The apparatus of any of Claims 6 to 9, and arranged for identifying diamonds.

11. A method of identifying specific objects or zones, substantially as herein described with reference to the accompanying drawings.

12. Apparatus for identifying specific objects or zones, substantially as herein described with reference to, and as shown in, Figure 1 or Figure 2 of the accompanying drawings.

13. The apparatus of any of Claims 6 to 10 and 12, and further comprising means for subjecting a plurality of the objects or zones to the exciting radiation.

EP 0 341 092 A2

FIG.1.

FIG.2.

EP 0 341 092 A2